# EUROPÄISCHE PATENTSCHRIFT

(11) **EP 0 922 049 B1**
(45) Veröffentlichungstag und Bekanntmachung des Hinweises auf die Patenterteilung: **12.09.2001**
(21) Anmeldenummer: 97937517.7
(22) Anmeldetag: 26.07.1997
(51) Int. Cl.: C07F 5/04, H01M 10/08, C07F 5/02

(54) **VERFAHREN ZUR HERSTELLUNG VON LITHIUM-BORAT-KOMPLEXEN**
PROCESS FOR PREPARING LITHIUM-BORATE COMPLEXES
PROCEDE DE PREPARATION DE COMPLEXES LITHIUM-BORATE

(30) Priorität: 16.08.1996 DE 19633027
(43) Veröffentlichungstag der Anmeldung: 16.06.1999
(73) Patentinhaber: MERCK PATENT GmbH, 64293 Darmstadt (DE)
(72) Erfinder: BARTHEL, Josef, D-93138 Lappersdorf (DE); BÜSTRICH, Ralf, D-97072 Würzburg (DE); WÜHR, Manfred, D-93053 Regensburg (DE)
(86) Internationale Anmeldenummer: EP9704068
(87) Internationale Veröffentlichungsnummer: WO9807729

(56) Entgegenhaltungen:
- EP-A- 0 631 340
- WO-A-94/27335
- BARTHEL J ET AL: "A new class of electrochemically and thermally stable lithium salts for lithium battery electrolytes. I. Synthesis and properties of lithium bis[1,2-benzenediolato(2-)-O,O']borate" J. ELECTROCHEM. SOC. (JESOAN,00134651);95; VOL.142 (8); PP.2527-31, UNIVERSITAET REGENSBURG;INSTITUT THEORETISCHE PHYSIKALISCHE CHEMIE; REGENSBURG; D-93040; GERMANY (DE), XP002045783
- CHEMICAL ABSTRACTS, vol. 119, no. 4, 26.Juli 1993 Columbus, Ohio, US; abstract no. 038393, HOTTA K ET AL: "Characteristics of the bulk made from silver-coated powders of bismuth system" XP002045786 & FUNTAI OYOBI FUNMATSU YAKIN (FOFUA2,05328799);93; VOL.40 (2); PP.208-11, NIPPON INST. TECHNOL.;SAITAMA; 345; JAPAN (JP),
- BARTHEL J ET AL: "A new class of electrochemically and thermally stable lithium salts for lithium battery electrolytes. III. Synthesis and properties of some lithium organo borates" J. ELECTROCHEM. SOC. (JESOAN,00134651);96; VOL.143 (11); PP.3572-3575, UNIV. REGENSBURG;INST. THEOR. PHYS. CHEM.; REGENSBURG; D-93040; GERMANY (DE), XP002045784
- BARTHEL J ET AL: "A new class of electrochemically and thermally stable lithium salts for lithium battery electrolytes. II. Conductivity of lithium organoborates in dimethoxyethane and propylene carbonate" J. ELECTROCHEM. SOC. (JESOAN,00134651);96; VOL.143 (11); PP.3565-3571, UNIV. REGENSBURG;INST. THEOR. PHYS. CHEM.; REGENSBURG; D-93040; GERMANY (DE), XP002045785

## Beschreibung

Die Erfindung betrifft Lithiumkomplexsalze der allgemeinen Formel (I) 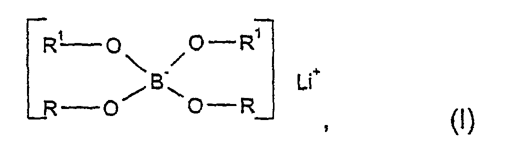
- worin R und R¹: gleich oder verschieden sind,
gegebenenfalls durch eine Einfach- oder Doppelbindung direkt miteinander verbunden sind,
jeweils einzeln die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann,
haben oder
jeweils gemeinsam die Bedeutung eines aromatischen Rings aus der Gruppe Naphthyl, Anthracenyl oder Phenanthrenyl, der unsubstituiert oder ein- bis vierfach durch A oder hal substituiert sein kann,
haben oder
jeweils einzeln die Bedeutung eines heterocyclischen aromatischen Rings aus der Gruppe Pyridyl, Pyrrol, 1,2-Diazin, 1,3-Diazin oder 1,4-Diazin, der unsubstituiert oder ein- bis dreifach durch A oder Hal substituiert sein kann,
haben oder
jeweils gemeinsam die Bedeutung eines heterocyclischen aromatischen Rings aus der Gruppe Pyrrol, 1,2-Diazin oder 1,3-Diazin, der unsubstituiert oder ein- bis dreifach durch A oder Hal substituiert sein kann,
haben und
- Hal: F oder Cl
und
- A: Alkyl mit 1 bis 6 C-Atomen, das ein- bis vierfach halogeniert sein kann,
bedeuten.
deren Verwendung als Elektrolyte in sekundären Lithiumbatterien sowie ein Verfahren zur Herstellung dieser Verbindungen.

Wegen des niedrigen Ruhepotentials von Lithium kommen als Lösungsmittel nur aprotische Verbindungen in Frage. Protische Verbindungen, wie Alkohole, reagieren mit lithiumhaltigen Anoden unter Wasserstoffentwicklung, was letztendlich zur Explosion der Zelle führt.

Als organische Lösungsmittel in sekundären Lithiumbatterien kommen grundsätzlich alle dem Fachmann für diese Anwendung bekannten Lösungsmittel und Lösungsmittelgemische in Frage. Geeignet sind u. a. sowohl Ether als auch Ester, einschließlich der cyclischen organischen Carbonate, wie z. B. Propylencarbonat oder Ethylencarbonat. Es können jedoch nicht nur Flüssigkeiten sondern auch Polymere als Lösungsmittel dienen. Voraussetzung hierfür ist jedoch, daß das verwendete Polymer Lithiumsalze löst und mit diesen ionisch leitende Mischungen bildet. Eines der am häufigsten verwendeten Polymere ist Polyethylenoxid. Zur Erhöhung der Leitfähigkeit können Mischungen aus einem Polymer und einem oder mehreren Lösungsmitteln verwendet werden (Amalgier et. al. In: Proceedings of the Symposium on Primary and Secondary Lithium Batteries, Vol. 91-1, 131-141, (1991); K. M. Abraham and M. Salomon (Hrsg.), The Electrochemical Society, Pennington N. J.). die Verwendung von Polymerelektrolyten erhöht die Betriebssicherheit der Zelle, weil bei einer mechanischen Beschädigung des Zellcontainers ein Auslaufen des Elektrolyten und somit die Freilegung der Elektrodenoberflächen vermieden wird.

Als Leitsalze für Lithiumzellen werden ausschließlich Salze mit großen negativ geladenen anorganischen oder organischen Gegenionen verwendet. Leitsalze mit kleinen Gegenionen wie z. B. Lithiumchlorid kommen wegen der durch die hohe Gitterenergie bedingten geringen Löslichkeit nicht in Frage.

Lithiumsalze mit fluorierten anorganischen Anionen gehören zu den bisher am häufigsten untersuchten Leitsalzen für sekundäre Lithiumzellen. Lösungen von Lithiumtetrafluoroborat in verschiedenen Ethem zeigen auf inerten Substraten relativ geringe Zyklisierausbeuten. Auf Kohlenstoffanoden wurden mit LiBF₄/Polyethylencarbonat-Lösungen ebenfalls schlechte Ausbeuten erzielt (Maki Sato et al. In: Proceedings of the Symposium on Primary and Secondary Lithium Batteries, Vol. 91-3, 407-415, (1991); K. M. Abraham and M. Salomon (Hrsg.), The Electrochemical Society, Pennington N. J.). Lithiumtetrafluoroborat ist daher für die Anwendung in sekundären Lithiumzellen nicht optimal geeignet.

Lithiumhexafluoroantimonat wird bei Potentialen, die größer sind als das Gleichgewichtspotential der Reaktion von elementarem Lithium in Li⁺ + e⁻, u. a. zu elementarem Antimon reduziert und kann daher folglich nicht als Leitsalz verwendet werden. Lithiumhexafluoroarsenat zeigt in den meisten Lösungsmitteln und Lösungsmittelgemischen auf inerten Substraten sehr hohe Zyclisierungsausbeuten. Für die Lösung von LiAsF₆ in 2-Methyltetrahydrofuran wurden Zyclisierungsausbeuten von über 96 % gefunden (Goldman et al., J. Electrochem. Soc., Vol. 127, 1461-1467 (1980). Die Giftigkeit und die geringe Umweltverträglichkeit von Lithiumhexafluoroarsenat und seinen Folgeprodukten steht einer großtechnischen Anwendung entgegen (Archuleta, M. M., J. Power Sources 54, 138 (1995).

Auch LiPF₆-haltige Lösungen auf der Basis von organischen Carbonaten wurden in Zellen mit Lithiumanoden getestet. Ein wesentlicher Nachteil dieser Systeme ist die geringe thermische Stabilität von LiPF₆. In Lösung findet eine teilweise Dissoziation in LiF und PF₅ statt, was zu einer durch die Lewissäure PF₅ initiierte kationische Polymerisation des Lösungsmittels führen kann (Koch et al. In: Proceedings of the Symposium Lithium Batteries, Vol. 81-4, 165-171, (1981), The Electrochemical Society, Pennington N. J. ; H. V. Venkatasetty (Hrsg.).

Zur Vermeidung der Dissoziation von anorganischen fluorierten Gegenionen wurden auch organische Lithiumsalze mit perfluorierten organischen Resten getestet, wie z. B. Lithiumtrifluormethansulfonat, Lithiumbis(trifluormethansulfonyl)imid und Lithiumtris(trifluormethansulfonyl)methid. Diese Salze werden wegen ihrer hohen thermischen Stabilität vor allem in ionisch leitenden Polymeren eingesetzt. Die beiden letztgenannten Salze weisen eine wesentlich höhere Leitfähigkeit auf als das erstgenannte und sind in hohem Maße oxidationsstabil. Sie wurden mit Erfolg in Zellen mit Kohlenstoffanoden und Nickeloxidkathoden eingesetzt (Dahn et al. J of Electrochem. Soc., Vol. 138, 2207-2211 (1991). Ein gravierender Nachteil ist jedoch der durch das Herstellungsverfahren bedingte hohe Preis. Wegen des hohen Fluorgehalts dieser Verbindungen sind außerdem exotherme Reaktionen mit Lithium zu befürchten.

Von Horowitz et al. (In: Proceedings of the Symposium Lithium Batteries, Vol. 81-4, 131-143, (1981), The Electrochemical Society, Pennington N. J. ; H. V. Venkatasetty (Hrsg.)wurde auch die Verwendung von Lithiumorganoboraten untersucht. Wegen der geringen anodischen Stabilität, der mit der Bildung von Triorganoboranen verbundenen sicherheitstechnischen Probleme sowie ihres hohen Preises werden Tetraorganoborate nicht in Lithiumzellen verwendet.

Eine Synthese von Lithiumboratkomplexen, ausgehend von Borsäure in wäßriger Lösung wird in WO 94/27335 und J. Barthel et al. in J. Electrochem. Soc. 142/8, 2527 (1995) beschrieben. Ein entscheidendes Kriterium für Elektrolyten, die in Li-Ionen-Batterien eingesetzt werden können, ist neben der hohen Reinheit insbesondere die Abwesenheit von Wasser. Die Produkte aus dieser Synthese können nicht absolut wasserfrei gewonnen werden.

Untersucht wurde auch die Verwendung von Lithiumchloroboraten (Johnson, J. W.; Brody, J. F.; J. Electrochem. Soc., Vol. 129, 2213-2219 (1982). Herstellungs- und Reinigungsverfahren dieser Verbindungen sind jedoch sehr aufwendig und Lösungen dieser Salze neigen zur Phasentrennung. Wegen des hohen Chloranteils sind sie nicht stabil.

Aufgabe der Erfindung war es daher umweltverträgliche, stabile, und preiswert herstellbare Lithiumkomplexsalze mit verbesserten Eigenschaften zur Verfügung zu stellen, die in geeigneten Lösungsmitteln als Elektrolyte für die Herstellung von sekundären Lithiumbatterien geeignet sind. Aufgabe der Erfindung ist es weiterhin ein Verfahren zu deren Herstellung dieser Lithiumkomplexsalze zur Verfügung zu stellen.

Durch Versuche wurde gefunden, daß die erfindungsgemäße Aufgabe gelöst werden kann durch Lithiumkomplexsalze der allgemeinen Formel (I) 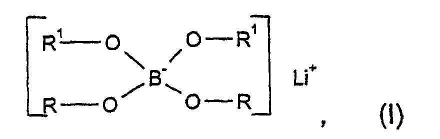
- worin R und R¹: gleich oder verschieden sind, gegebenenfalls durch eine Einfach- oder Doppelbindung direkt miteinander verbunden sind,
jeweils einzeln die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann,
haben oder
jeweils gemeinsam die Bedeutung eines aromatischen Rings aus der Gruppe Naphthyl, Anthracenyl oder Phenanthrenyl, der unsubstituiert oder ein- bis vierfach durch A oder hal substituiert sein kann,
haben oder
jeweils einzeln die Bedeutung eines heterocyclischen aromatischen Rings aus der Gruppe Pyridyl, Pyrrol, 1,2-Diazin, 1,3-Diazin oder 1,4-Diazin, der unsubstituiert oder ein- bis dreifach durch A oder Hal substituiert sein kann,
haben oder
jeweils gemeinsam die Bedeutung eines heterocyclischen aromatischen Rings aus der Gruppe Pyrrol, 1,2-Diazin oder 1,3-Diazin, der unsubstituiert oder ein- bis dreifach durch A oder Hal substituiert sein kann,
haben und
- Hal: F oder Cl
und
- A: Alkyl mit 1 bis 6 C-Atomen, das ein- bis vierfach halogeniert sein kann,
bedeuten,
und zwar insbesondere durch solche Lithiumkomplexsalze, in denen R und R¹ gleich oder verschieden, gegebenenfalls durch Einfach- oder Doppelbindung miteinander verbunden sind und jeweils die Bedeutung Phenyl oder Pyridyl haben. Ganz besonders geeignet sind die der allgemeinen Formel (I) entsprechenden
Lithiumkomplexsalze
Lithium-bis[2,2'-biphenyldiolato(2-)-O,O']-borat(1-),
Lithium-bis[2,3-naphthalindiolato(2-)-O,O']borat(1-).

Gegenstand der Erfindung ist auch ein Verfahren zur Herstellung der erfindungsgemäßen Verbindungen sowie ein neues Verfahren zur Herstellung von ein- bis vierfach fluorierten, an benachbarten C-Atomen hydroxylierten Aromaten, insbesondere von Tetrafluorcatechol, die als Zwischenprodukte zur Herstellung der erfindungsgemäßen Lithiumboratkomplexe benötigt werden.

Durch das erfindungsgemäße Verfahren können überraschenderweise auch solche Liganden an das Zentralatom Bor koordiniert werden, die sich nicht in Wasser lösen, wie z. B.

Pyridindiol, Dihydroxybiphenyl oder andere, vorzugsweise hydroxylierte aromatische Verbindungen.

Aufgrund der erfindungsgemäßen Reaktionsbedingungen kann sich die Gegenwart von Wasser, das in wäßrigen Medien als Ligand an das Zentralatom unter Bildung von B(OH)₄⁻ gebunden werden kann, sowohl während der Komplexbildungsreaktion als auch während der Isolierung der hergestellten Produkte, die unter anderem durch das Einengen der Lösung erfolgt, störend auswirken, indem B-O-B-verbrückte Nebenprodukte gebildet werden.

Durch das erfindungsgemäße Verfahren wird die Lage des Gleichgewichts der Komplexbildungsreaktion derart beeinflußt, daß die Reaktionslösung schonend eingedampft werden kann und Produktausbeuten von 100 % erhalten werden.

Besonderer Vorteil des erfindungsgemäßen Verfahrens ist die Möglichkeit unter milden Bedingungen ohne Einsatz von aggressiven Reagenzien, wie BCl₃, BF₃ oder LiBH₄, wodurch während der Komplexbildungsreaktion HCl, HF oder auch H₂ gebildet werden, arbeiten zu können. Weiterhin ergibt sich durch das erfindungsgemäße Verfahren eine elegante Möglichkeit, in Methanol gelöstes LiB(OCH₃)₄ in eine polymere Matrix, wie z. B. hydroxyliertes PEO, einzubringen und einen polymeren Elektrolyten herzustellen, bei dem das Anion an das Polymergerüst fixiert ist.

Zur Herstellung der erfindungsgemäßen Komplexsalze wird ein Lithiumtetraalkoholatoborat in einem aprotischen Lösungsmittel vorgelegt. Diese Lösung wird gegebenenfalls etwas erwärmt, so daß das Borat in Lösung geht.

Für die Reaktion geeignete Lithiumtetraalkoholatoborate sind die Derivate des Methanol, Ethanol, Propanol aber auch anderer kurzkettiger Alkohole. Besonders bevorzugt wird jedoch mit den Derivaten des Methanol oder Ethanol gearbeitet, da diese Alkohole sich aufgrund ihres niedrigen Siedepunkts nach erfolgter Komplexbildung bei relativ niedrigen Temperaturen aus dem Reaktionsgemisch entfernen lassen.

Zur Komplexbildung wird eine geeignete Hydroxylverbindung oder ein Gemisch von verschiedenen geeigneten Hydroxylverbindungen im Verhältnis 1:1 in dem gleichen aprotischen Lösungsmittel wie vorher das Lithiumtetraalkoholatoborat gelöst und in äquimolarer Menge zu der vorgelegten Lösung langsam bei einer Temperatur zwischen 10 und 60 °C, bevorzugt bei Raumtemperatur bis etwa 55 °C, falls notwendig unter Schutzgasatmosphäre, zugetropft. Zur Vervollständigung der Reaktion wird die Reaktionslösung gegebenenfalls bei einer Temperatur zwischen 60 bis 90 °C für einige Zeit nachgerührt. Das Nachrühren kann sich bei sehr schnell verlaufenden Komplexbildungsreaktionen erübrigen.

Als aprotisches Lösungsmittel kann ein Lösungsmittel aus der Gruppe Acetonitril, Aceton, Nitromethan, Dimethylformamid, Dimethylacetamid, Dimethylsufoxid verwendet werden. Vorzugsweise wird Acetonitril eingesetzt.

Unter Anlegen eines leichten Vakuums und evtl. durch leichtes Erwärmen auf etwa 50 bis 60 °C wird der während der Reaktion gebildete Alkohol, falls dieser bei der nachfolgenden Isolierung des hergestellten Komplexsalzes stört, abgetrennt. Je nach Löslichkeit des hergestellten Lithiumkomplexsalzes im verwendeten aprotischen Lösungsmittel wird die Reaktionslösung eingeengt, bzw das Lösungsmittel vollständig abdestilliert und sofern nicht spontan eine Auskristallisation erfolgt, für mehrere Stunden auf eine Temperatur von 0 bis 10 ° C abgekühlt. Das kristalline Produkt wird in üblicher Weise abgetrennt und durch langsames Erwärmen getrocknet.

Zur Komplexbildung in Frage kommen insbesondere in benachbarten Positionen hydroxylierte Aromaten, wie Brenzcatechin 1,2- oder 2,3- Dihydroxynaphthalin, aber auch entsprechend hydroxyliertes Anthracen oder Phenanthren. Geeignet sind aber auch durch Bindung miteinander verbundene Aromaten, die in direkter Nachbarschaft zur Bindung jeweils eine Hydroxylgruppe besitzen, wie z. B 2,2'-Dihydroxybiphenyl. Weiterhin eignen sich zur Komplexbildung entsprechende Heterocyclen, wie z. B. 2,3-Pyridindiol, 3,4-Pyridindiol oder entsprechend hydroxyliertes Bipyridyl. Weitere zur Komplexbildung geeignete Aromaten sind auch in Nachbarstellung hydroxylierte Diazine wie z. B. 1,3-Diazin-5,6-diol, 1,2-Pyrazin-3,4-diol, 1,2-Pyrazin-4,5-diol und 1,4-Pyrazin-2,3-diol, oder die entsprechenden Diole des Pyrrols. Entsprechende zur Komplexbildung geeignete Liganden können sowohl am Heteroatom als auch an nicht hydroxylierten Kohlenstoffatomen des aromatischen Rings durch Halogenatome oder Alkylreste mit 1-6 C-Atomen, die halogeniert sein können, ein- oder mehrfach substituiert sein. Zu diesen Liganden zählt beispielsweise 1-Trifluormethyl-2,3-pyrroldiol. Jedoch nicht nur die heterocyclischen sondern auch die übrigen in Frage kommenden Aromaten können ein- oder mehrfach, d. h. bis zu vierfach, halogeniert sein, und zwar insbesondere fluoriert oder chloriert. Aber auch ein- oder mehrfach alkylierte, hydroxylierte Aromaten, insbesondere entsprechendes durch Methyl, Ethyl-, n-oder i-Propyl, n-, sek.- oder tert.-Butyl substituiertes Phenyl, Naphthyl, Anthracenyl oder Phenanthrenyl, können vorteilhaft zur Komplexbildung eingesetzt werden.

Unter den zur Komplexbildung geeigneten Hydroxylverbindungen befinden sich auch solche, die kommerziell nicht erhältlich sind. Ein solches ist z. B. Tetrafluorcatechol. Nach aus der Literatur bekannten Verfahren läßt es sich nur in geringen Ausbeuten herstellen. Versuche haben nun gezeigt, daß sich diese Dihydroxyverbindung in hohen Ausbeuten herstellen läßt, indem man Pentafluorphenol mit Kaliumcarbonat zum entsprechenden Kaliumpentafluorphenolat umsetzt und dieses anschließend in DMSO mit 2-Bromethanol zum Monoether und dann mit Kaliumcarbonat in DMF zum cyclischen Diether umsetzt, aus dem dann durch Etherspaltung in Benzol Gegenwart von Aluminiumchlorid das gewünschte Tetrafluorcatechol erhalten wird. Der cyclische Diether kann jedoch auch in einem Reaktionsschritt durch Umsetzung mit Ethylenoxid in DMSO bei erhöhter Temperatur unter Schutzgasatmosphäre erhalten werden. Je nach Reaktionsführung werden nach dieser Methode Ausbeuten von 80 bis 95 % erhalten. Dieses Verfahren kann auch angewendet werden, um ein-, zwei- oder dreifach fluorierte Dihydroxyaromaten herzustellen.

In Cyclisierungsversuchen haben erfindungsgemäße Li-Boratkomplexe dieser fluorierten Dihydroxyverbindung besonders gute Ergebnisse gezeigt und sich als besonders stabil erwiesen. In Kombination mit anderen Salzen weisen diese Komplexe einen synergistischen Stabilisierungseffekt gegenüber einer Oxidation auf. Dieser Effekt scheint abhängig von der Zahl der pro Ligand gebundenen Fluoratomen zu sein, da elektrochemische Messungen eine Stabilisierung um 0,1V/Fluoratom/Ligand gezeigt haben.

Dies bedeutet, daß diese erfindungsgemäßen fluorierten Boratkomplexsalze sich besonders gut, aber auch die übrigen erfindungsgemäßen Li-Boratkomplexe zur Verwendung in elektrochemischen Zellen eignen und zwar nicht nur in primären und sekundären Batterien, sondern auch in Doppelschicht- oder Superkondensatoren sowie zur Herstellung von Displays oder elektrisch schaltbaren Fenstern.

Die erfindungsgemäßen Komplexsalze können allein oder im Gemisch verwendet werden. Sie sind aber auch im Gemisch mit anderen dem Fachmann für diese Verwendungen bekannten Leitsalze einsetzbar. Auch können die erfindungsgemäßen Li-Salze im Gemisch mit entsprechenden Ammoniumboratkomplexen oder anderen Alkali- bzw. Erdalkaliboratkomplexen verwendet werden.

Durch Versuche wurde gefunden, daß die erfindungsgemäßen Komplexsalze, insbesondere Lithium-bis[2,2'-biphenyldiolato]-borat(1-) in Verbindung mit hochoxidierenden Kathodenmaterialien eingesetzt werden können. Auch können diese Verbindungen im Gemisch mit anderen Lithiumverbindungen verwendet werden, um einen Überlastschutz zu gewährleisten. Bei der Herstellung von Elektrolytgemischen ist es vorteilhaft, zur Stabilisierung ein Lithiumalkoholat zuzusetzen, wenn Lithium-bis[perfluor-1,2-benzendiolato(2)-O,O']-borat(1-) gemeinsam im Gemisch mit Lithium-bis[2,2'-biphenyldiolato]-borat(1-) oder mit anderen erfindungsgemäßen Lithiumboratkomplexen verwendet wird. Stabile Gemische von Lithium-bis[perfluor-1,2-benzendiolato(2)-O,O']-borat(1-) mit anderen erfindungsgemäßen Komplexsalzen werden erhalten, wenn solche Komplexe zugesetzt werden, die am aromatischen Ring Substituenten mit elektronenschiebenden Eigenschaften, also Substituenten mit einem +I-Effekt, besitzen. Substituenten mit +I-Effekt sind beispielsweise Alkylgruppen, wie Methyl, Ethyl, Propyl, i-Propyl, n-Butyl, sek.- und tert.-Butyl.

Insbesondere durch elektrochemische Versuche die mit 0,5 molaren Lösung von Lithium-bis[2,2'-biphenyldiolato]-borat(1-) in einem Lösungsmittelgemisch, bestehend aus einem Propylencarbonat/ Dimethylethylenglykol 4:1 (an Edelstahl, 0.5 cm², v=20mV/s) durchgeführt wurden, zeigten, daß die Oxidation des Anions erst bei einer Spannung über 4 V beginnt, wobei aber nur sehr geringe Ströme fließen. Nach dem zweiten Entladungscyclus ist jedoch keine Oxidation über 4 V mehr zu messen. Vom ersten bis zum vierten Cyclus steigt der Deckschichtwiderstand bei der Lithiumabscheidung an und die Ausbeuten der Cydisierung sind etwa konstant bei 48 m/C 65 m/C (74%) und mit anderen Salzen in PC/DME vergleichbar. Erhöht man nun das Umkehrpotential von 4,5 auf 5 V und 6 V, so steigt der Deckschichtwiderstand weiter an und die Ausbeuten der Lithiumabscheidung sinken. Besonders herauszuheben ist die hohe anodische Oxidationsstabilität der gebildeten Deckschicht. Selbst bei einem Umkehrpotential von 8 V kann kein oxidativer Strom beobachtet werden, obwohl die Lösungsmittel ab ca. 5 V (PC) instabil sind und beginnen, sich zu zersetzen beginnen.

Durch Versuche mit Elektrolytlösungen, denen zusätzlich zum Lithium-bis[2,2'-biphenyldiolato]-borat(1-) Lithiumphenolat zugesetzt worden war, wurden zwar im ersten Cyclus geringe anodische Ströme nachgewiesen, jedoch trat keine Verfärbung des Elektrolyten auf, so daß eine sonst auftretende Oxidation durch die Zugabe von Lithiumphenolat vermieden werden konnte. Und zwar wurden diese Versuche ausgehend von einem Ruhepotential von ca. 3000 mV mit einer Potentialvorschubgeschwindigkeit von 20 mV/s auf 4500 mV, dann auf -500 mV und schließlich zurück zum Ruhepotential gefahren. Das gleiche positive Ergebnis wurde erhalten bei Versuchen , in denen das anodische Umkehrpotential auf 6000 mV erhöht wurde. Auch Elektrolytlösungen in denen Bis[1,2-benzendiolato]-boratanionen und das Lösungsmittel Dimethylethylenglykol enthalten sind werden durch Li-phenolat bei Potentialen weit über 4000 mV vor einer Oxidation geschützt.

Die gleichen positiven Eigenschaften wie Li-phenolat weist Dilithium-2,2'-biphenyldiolat auf. Schon geringe Mengen als Zusatz reichen zur Stabilisierung des Elektrolyten aus.

### Beispiele

### Beispiel 1

### Lithium-bis[2,2'-biphenyldiolato(2-)-O,O'-borat(1-)

6,6 g (47 mmol) Lithiumtetramethanolatoborat werden in 80 ml Acetonitril bei 55 °C vorgelegt. Dazu werden 17,5 g (94 mmol) 2,2'-Dihydroxybiphenyl (Reinheit > 99 %) , gelöst in 100 ml Acetonitril, zugetropft. Nach Zugabe von 30 ml Biphenyllösung hat sich alles Lithiumtetramethanolatoborat gelöst. Nach Zugabe von weiteren 20 ml fällt schnell viel farbloses Produkt aus. Es werden die restlichen 50 ml Lösung zugegeben, ohne daß der Niederschlag in Lösung geht. Das entstehende Methanol wird durch leichtes Evakuieren bei 55 °C innerhalb von 2 Stunden aus dem Gemisch entfernt. Nun wird auf Raumtemperatur abgekühlt, unter Schutzgas abfiltriert und mit Acetonitril gewaschen. Das filtrierte, farblose Produkt wird unter langsamem Erwärmen auf eine Temperatur von 180 °C getrocknet.

Ausbeute: 3,2 g Lithium-bis[2,2'-biphenyldiolato(2-)-O,O'-borat(1-) (17,7 % der Theorie)
H¹-NMR (250 MHz, DMSO-d₆)[δ/ppm]:
7.35 (dd³J_{H4/H3}=7.5Hz, ⁴J_{H4/H2}=1.5 Hz, H4)
7.25 (td³J_{H2/H1}=7.5Hz, ⁴J_{H2/H4}=1.5 Hz, H2)
6.99(td³J_{H3/H1}=7.4Hz, ⁴J_{H3/H1}=0.9 Hz, H3)
6.91 (dd³J_{H1/H3}=7.5 Hz, ⁴J_{H1/H3}=0.9 Hz, H4)
¹¹B-NMR: (128,38 MHz, 0.3 M DMSO-d₆, Et₂O*BF₃ ext.)
8.8 ppm (s)

### Potentiometrische Titration:

Die Titration wird mit verdünnter HCl durchgeführt.
Der theoretische Borgehalt beträgt 2,80 %, der tatsächliche Borgehalt beträgt 2.791 %.
Die Reinheit der Substanz beträgt 99.9 %.
MS (NI-LISIMS; CH₃CN):
379.0 (100%, M⁻Li⁺).

### Löslichkeit:

Die Substanz ist bis ca. 0.5 molal in EC/DME löslich, ebenso in PC. In reinen PC-Lösungen fällt jedoch nach kurzer Zeit ein Solvat aus.

### Beispiel 2 (nicht beansprucht)

### Lithium-bis[1,2-benzendiolato(2-)-O,O']borat(-1)

6.19 g (43,6 mmol) Lithiumtetramethanolatoborat werden in 100 ml Acetonitril bei 35 °C vorgelegt. Dazu werden 9.61 g 887.3 mmol) Brenzcatechin gegeben. Es entsteht sofort eine gelbe Lösung. Es wird für eine Stunde auf 80 °C erhitzt und dann im Vakuum auf 40 ml Gesamtvolumen eingeengt. Die Lösung färbt sich braun. Beim Abkühlen der Lösung fallen ab 50 °C farblose rechteckige Plättchen aus. Zur vollständigen Auskristallisation des Produkts wird die Lösung für de Dauer von 12 Stunden bei einer Temperatur von 5 °C gehalten, Die überstehende Lösung wird anschließend abdekantiert und die erhaltenen Kristalle im Vakuum bei 140 °C bis zur Gewichtskonstanz getrocknet. Es wird ein graues Pulver erhalten.

Ausbeute: 537 g Lithium-bis[1,2-benzendiolato(2-)-O,O']-borat(-1) (23 mmol, 52.7 % der Theorie)

Zersetzungspunkt: 270 °C.
¹H-NMR (250 MHz, DMSO-d₆) [δ/ppm]:
6.48 ppm (s)
¹³C-NMR (62.9 MHz, DMSO-d₆):
151.6 ppm (s, Cl, C2)
117.3 ppm (s C4, C5)
107.6 ppm (s, C3, C6)

### Beispiel 3

### Lithiumphenolat

Im geschlossenen Abzug mit Eingriffhandschuhen werden 2,26 g (326 mmol) Lithium geschnitten. Unter Schutzgasatmosphäre (Ar 6.0) werden 150 ml Tetrahydrofuran zugegeben. Anschließend werden unter Rühren mit einem Magnetrührer innerhalb von 3 Stunden bei 40 °C 27.72g (294.6 mmol) Phenol p.a., gelöst in 75 ml Tetrahydrofuran, zugetropft. Es fällt ein farbloser Niederschlag aus. Es wird bei Raumtemperatur für 14 Stunden nachgerührt, wobei der Niederschlag wieder in Lösung geht. Geringe Mengen nicht umgesetztes Lithium werden im geschlossenen Abzug abfiltriert. Das Lösungsmittel wird abgedampft und das zurückbleibende Produkt im Ölpumpenvakuum bis zur Gewichtskonstanz getrocknet.
Es wird ein Produkt mit 99.9 %-iger Reinheit erhalten.

### Beispiel 4

### Dilithium-2,2'-biphenyldiolat

Zu 1,67 g (0.241 mol) Lithium werden 100 ml Methanol zugetropft und langsam erwärmt. Bei einer Temperatur von 50 °C entsteht eine farblose Lösung. Anschließend wird unter Rühren eine Lösung, bestehend aus 100 ml Methanol und 22,4 g (0,120 mol) 2,2'-Dihydroxybiphenyl, zugetropft. Von der so erhaltenen Reaktionslösung wird das Lösungsmittel abdestilliert und das erhaltene farblose Produkt im Vakuum langsam bis auf eine Temperatur von maximal 100 °C erwärmt und getrocknet.

Ausbeute: 100 % der Theorie,
Reinheit: 99,6 % (ermittelt durch Titration)

### Beispiel 5 (nicht beansprucht)

### Lithium bis[tetrafluoro-1,2-phenyldiolato(2-)-O,O']borat

### a) Kaliumpentafluorphenolat

94,1 g Pentafluorphenol, gelöst in Wasser, werden langsam unter Rühren zu 48,4 g festem Kaliumcarbonat gegeben, wobei eine starke Gasentwicklung (CO₂) stattfindet. Es werden Kristalle ausgeschieden, die erst nach der Zugabe von weiteren 200 ml Wasser und Erhöhung der Temperatur auf 95 °C und in Lösung gehen. Diese Lösung wird auf 20 °C abgekühlt. Nach 12 Stunden werden die gebildeten Kristalle abgetrennt und dreimal mit 40 ml auf 0 °C abgekühltes Wasser gewaschen. Das erhaltene kristalline Produkt wird getrocknet, indem die Temperatur langsam auf 150 °C erhöht wird.
Ausbeute: 93,7 % der Theorie
Zersetzungspunkt: 240 °C

### b) Lithiumtetramethanolatoborat

9,92 g Lithium werden unter Argonatmosphäre in einem geschlossenen Abzug mit Eingriffhandschuhen in eine Pyrexflasche gegeben. Unter Kühlung mit einem Eis-Methanolgemisch werden langsam unter Rühren 250 ml Methanol zu dem Lithium gegeben. Es findet eine stark exotherme Reaktion statt. Anschließend werden schrittweise weitere 320 ml Methanol hinzugegeben. Das Reaktionsgemisch wird auf eine Temperatur von 60 °C erwärmt, wobei sich eine homogene Lösung bildet, zu der langsam 148,6 g Borsäuretrimethylester zugetropft werden. Es bildet sich ein weißes kristallines Produkt. Nach 24 stündigem Stehen bei Raumtemperatur wird das Produkt abfiltriert und bei reduziertem Druck getrocknet.
Ausbeute: 93,7 % der Theorie
Zersetzungstemperatur: 50 °C

### c) 5,6,7,8-Tetrafluoro-(1,4)-benzodioxan

40,2 g Kaliumpentafluorphenolat werden gelöst in 150 ml getrocknetem DMSO, das vorher mit hochreinem Argon behandelt worden ist. 100 ml getrocknetes und mit Argon behandeltes DMSO werden auf eine Temperatur von 175 °C erwärmt. Hierzu werden innerhalb von 30 Minuten 75 ml der Kaliumpentafluorphenolatlösung getropft. Gleichzeitig leitet man 3,1 g gasförmiges Ethylenoxid ein. Nach 45 Minuten bei 175 °C verfärbt sich die Lösung braun und KF-Salz kristallisiert aus. Weitere Phenolat- Lösung (25 ml) wird innerhalb von 20 Minuten langsam zugegeben und 3,1 g gasförmiges Ethylenoxid eingeleitet. Während der folgenden 45 Minuten werden die restlichen 50 ml Phenolat-Lösung zugetropft und weitere 3,9 g gasförmiges Ethylenoxid eingeleitet. Zum Schluß wird innerhalb von 60 Minuten weiteres Ethylenoxid (1,9 g) eingeleitet. Die Lösung wird anschließend noch für 2 Stunden bei einer Temperatur von 175 °C gerührt. Es bildet sich ein farbloser Niederschlag. Das Rohprodukt wird bei reduziertem Druck (1 bis 2 Torr) und bei einer Temperatur zwischen 60 und 70 °C sublimiert.
Ausbeute: 95 % der Theorie
Schmelzpunkt: 78 °C

### d) 3,4,5,6,-Tetrafluorcatechol

Die Etherspaltung wird durchgeführt, indem 41,6 g gemahlenes und getrocknetes Aluminiumchlorid und 10,7 g 5,6,7,8-Tetrafluor-(1,4)-benzodioxan unter Argonatmosphäre in einen mit Rückflußkühler ausgerüsteten Glaskolben gegeben werden und in 350 ml Toluol gelöst werden. Die Lösung wird unter Rühren für zwei Stunden auf eine Temperatur von 80 bis 110 °C erwärmt und anschließend für sechs Stunden auf Rückflußtemperatur von 110 bis 118 °C erwärmt. Die Reaktionslösung nimmt dabei eine schwarze Farbe an. Nach dem Abkühlen wird die Reaktionslösung auf 400 g Eis gegeben. Die wäßrige Phase wird zurückbehalten zur Extraktion. Von der organischen Phase wird Toluol abdestilliert und die zurückbleibenden Kristalle werden mit heißem Wasser extrahiert. Beide wäßrigen Phasen, aus der Eisbehandlung und Extraktion mit Wasser, werden vereinigt und dreimal mit 150 ml Diethylether extrahiert. Der Ether wird abdestilliert. Es bleibt ein grüner öliger Rückstand zurück, woraus bei 50 °C eine farblose Flüssigkeit erhalten wird, die bei 60 bis 80 °C bei reduziertem Druck (14 - 16 Torr) verdampft. Bei dieser Temperatur wird das gereinigte Tetrafluorcatechol durch Sublimation erhalten.
Ausbeute: 63,5 % der Theorie
FP: 68 °C

### e) Lithium bis[tetrafluor-1,2-benzenediolato(2-)-O,O']borat

5,24 g Lithiumtetramethanolatoborat und 13,5 g Tetrafluorcatechol werden in 11 g Acetonitril unter Argonatmosphäre gelöst. Die Lösung wird auf 50 °C erwärmt und 10 g Acetonitril abdestilliert. Zurück bleibt eine lila gefärbte viskose Lösung. Nach drei Tagen bei 5 °C haben sich farblose Kristalle gebildet. Die Ausbeute läßt sich steigern, indem die Lösung langsam bei reduziertem Druck auf 95 °C erwärmt wird. Zurück bleiben 15,6 g festes braunes Rohprodukt, das aus einem Gemisch bestehend aus 20 ml Benzol und 5 ml Acetonitril umkristallisiert wird. Es werden farblose Kristalle erhalten, die abfiltriert und mit Benzol gewaschen werden.
Ausbeute: 30,8 % der Theorie
Zersetzungspunkt: 270°C

### Beispiel 6

### Lithium bis[2,3-naphthalindiolato(2-)-O,O']borat(1-)

90,0 g 2,3-Dihydroxynaphthalin, 17,4 g Borsäure, 11,8 g Lithiumhydroxidmonohydrat und 100 ml Wasser werden in einen Glaskolben gegeben. Unter Argonatmosphäre wird das Gemisch auf 55 °C erwärmt. Durch Zusatz von 300 ml Aceton wird eine klare Lösung erhalten. Durch Kühlung auf 5 °C kristallisiert das Produkt farblos aus. Die abgetrennten Kristalle werden durch langsame Erwärmung von 10 °C auf 170 °C unter reduziertem Druck getrocknet. Durch zweimaliges Umkristallisieren aus 200 und 160 ml Aceton wird das Produkt gereinigt. Anschließend wird das Produkt langsam auf 170 °C erwärmt und bei dieser Temperatur gehalten.
Ausbeute: 28,6 % der Theorie
Zersetzungspunkt: 280 °C

## Patentansprüche

1. Lithiumkomplexsalze der allgemeinen Formel (I) 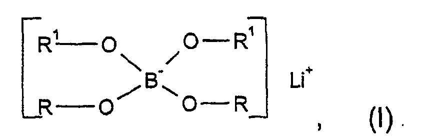
worin R und R¹ gleich oder verschieden sind, gegebenenfalls durch eine Einfach- oder Doppelbindung direkt miteinander verbunden sind,
jeweils einzeln die Bedeutung eines aromatischen Rings aus der Gruppe Phenyl, Naphthyl, Anthracenyl oder
Phenanthrenyl, der unsubstituiert oder ein- bis vierfach durch A oder Hal substituiert sein kann,
haben oder
jeweils gemeinsam die Bedeutung eines aromatischen Rings aus der Gruppe Naphthyl, Anthracenyl oder Phenanthrenyl, der unsubstituiert oder ein- bis vierfach durch A oder Hal substituiert sein kann,
haben oder
jeweils einzeln die Bedeutung eines heterocyclischen aromatischen Rings aus der Gruppe
Pyridyl, Pyrrol, 1,2-Diazin, 1,3-Diazin oder 1,4-Diazin, der unsubstituiert oder ein- bis dreifach durch A oder Hal substituiert sein kann,
haben oder
jeweils gemeinsam die Bedeutung eines heterocyclischen aromatischen Rings aus der Gruppe Pyrrol, 1,2-Diazin oder
1,3-Diazin, der unsubstituiert oder ein- bis dreifach durch A oder Hal substituiert sein kann,
haben und
Hal F oder Cl
und
A Alkyl mit 1 bis 6 C-Atomen, das ein- bis vierfach halogeniert sein kann,
bedeuten.

2. Lithiumkomplexsalze der allgemeinen Formel (I) gemäß Anspruch 1,
worin R und R¹ gleich oder verschieden sind, gegebenenfalls durch eine Einfach- oder Doppelbindung direkt miteinander verbunden sind,
jeweils die Bedeutung Phenyl, Naphthyl, Pyridyl, Pyrrol, 1,2-Diazin, 1,3-Diazin oder 1,4-Diazin haben.

3. Lithiumkomplexsalze der allgemeinen Formel (I) gemäß Anspruch 1,
worin R und R¹ gleich oder verschieden sind, gegebenenfalls durch eine Einfach- oder Doppelbindung direkt miteinander verbunden sind,
jeweils die Bedeutung Anthracenyl oder Phenanthrenyl haben.

4. Lithium-bis[2,2'-biphenyldiolato(2-)-O,O']-borat(1-), Lithium-bis[2,3-naphthalindiolato(2-)O,O']borat(1-) als Lithiumkomplexsalze der allgemeinen Formel (I) gemäß Anspruch 1.

5. Verfahren zur Herstellung von Lithiumkomplexsalzen der allgemeinen Formel (I) gemäß Anspruch 1, **dadurch gekennzeichnet, daß**
a) Lithiumtetraalkoholatoborat in einem aprotischen Lösungsmittel aufgenommen wird,
b) äquimolare Mengen einer Hydroxylverbindung oder eines 1:1-Gemischs von zwei verschiedenen Hydroxylverbindungen, gelöst in einem aprotischen Lösungsmittel bei einer Temperatur von 10 bis 60 °C unter Rühren, gegebenenfalls unter Schutzgasatmosphäre, zugetropft werden und, falls notwendig, das Reaktionsgemisch bei einer Temperatur von 60 bis 90 °C nachgerührt wird,
c) evtl. der während der Reaktion gebildete Alkohol unter Anlegen eines leichten Vakuums bei leicht erhöhter Temperatur langsam abdestilliert wird,
d) das gebildete Produkt, gegebenenfalls nach dem Einengen der Reaktionslösung, im Vakuum bei einer Temperatur von 0 bis 10 °C auskristallisiert und, falls notwendig, unter Schutzgasatmosphäre abgetrennt wird, und
e) das abgetrennte Produkt durch langsames Erwärmen getrocknet wird.

6. Verfahren gemäß Anspruch 5, **dadurch gekennzeichnet daß** Tetrafluorcatechol, hergestellt durch
a) Umsetzung von Pentafluorphenol mit Kaliumcarbonat in wäßriger Lösung zum Kaliumpentafluorphenolat,
b) Veretherung mit Ethylenoxid in DMSO als Lösungsmittel unter Schutzgasatmosphäre zum cyclischen Diether 5,6,7,8-Tetrafluor-(1,4)-benzodioxan
oder
Veretherung mit 2-Bromethanol und anschließender Cyclisierung zum Diether in Gegenwart von Kaliumcarbonat in DMF als Lösungsmittel,
c) Etherspaltung in Gegenwart von Aluminiumchlorid mit Benzol als Lösungsmittel unter Schutzgasatmosphäre, als Hydroxylverbindung zur Komplexbildung verwendet wird.

7. Verfahren gemäß Anspruch 5, **dadurch gekennzeichnet daß** Mono-, Di- oder Tricatechol, hergestellt wie Tetrafluorcatechol gemäß Anspruch 6, als Hydroxylverbindung zur Komplexbildung verwendet wird.

8. Verfahren gemäß Anspruch 5, **dadurch gekennzeichnet, daß** als Lithiumtetraalkoholatoborat Lithiumtetramethanolatoborat, Lithiumtetraethanolatoborat oder Lithiumtetrapropanolatoborat verwendet wird.

9. Verfahren gemäß Anspruch 5, **dadurch gekennzeichnet, daß** ein aprotisches Lösungsmittel aus der Gruppe Acetonitril, Aceton, Nitromethan, Dimethylformamid, Dimethylacetamid, Dimethylsulfoxid verwendet wird.

10. Verfahren gemäß Anspruch 5, **dadurch gekennzeichnet, daß** äquimolare Mengen Hydroxylverbindung bei Raumtemperatur zugetropft werden.

11. Verfahren gemäß Anspruch 5, **dadurch gekennzeichnet, daß** der gebildete Alkohol unter Einwirkung eines leichten Vakuums bei einer Temperatur von 50 bis 60 °C abdestilliert wird.

12. Verwendung von Lithiumkomplexsalzen der allgemeinen Formel (I) gemäß Anspruch 1 als Leitsalz in Elektrolyten für elektrochemische Zellen.

13. Verwendung von Lithiumkomplexsalzen der allgemeinen Formel (I) gemäß Anspruch 1 als Leitsalz in Elektrolyten für Batterien.

14. Verwendung von Lithiumkomplexsalzen der allgemeinen Formel (I) gemäß Anspruch 1 als Leitsalz in Elektrolyten in sekundären Lithiumbatterien.

15. Verwendung von Lithiumkomplexsalzen der allgemeinen Formel (I) gemäß Anspruch 1 in Kombination mit anderen Lithiumsalzen und/oder Boratkomplexen in Elektrolyten von sekundären Lithiumbatterien.

16. Verwendung von Lithiumkomplexsalzen der allgemeinen Formel (I) gemäß Anspruch 1 in Kombination mit anderen Lithiumsalzen aus der Gruppe Lithiumphenolat und Dilithium-2,2'-biphenyldiolat in Elektrolyten von sekundären Lithiumbatterien.

17. Verwendung von Lithiumkomplexsalzen der allgemeinen Formel (I) gemäß Anspruch 1 in Doppelschicht- und Superkondensatoren.

18. Verwendung von Lithiumkomplexsalzen der allgemeinen Formel (I) gemäß Anspruch 1 zur Herstellung von schaltbaren Fenstern oder von Displays.

## Claims

1. Lithium complex salts of the general formula (I) : 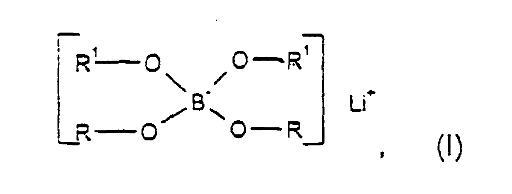
wherein R and R¹ are identical or different, are optionally joined together directly by a single or double bond,
individually are an aromatic ring from the group consisting of phenyl, naphthyl, anthracenyl and phenanthrenyl, which can be unsubstituted or monosubstituted to tetrasubstituted by A or Hal, or together are an aromatic ring from the group consisting of naphthyl, anthracenyl and phenanthrenyl, which can be unsubstituted or monosubstituted to tetrasubstituted by A or Hal, or individually are a heterocyclic aromatic ring from the group consisting of pyridyl, pyrrole, 1,2-diazine, 1,3-diazine or 1,4-diazine, which can be unsubstituted or monosubstituted to trisubstituted by A or Hal, or together are a heterocyclic aromatic ring from the group consisting of pyrrole, 1,2-diazine or 1,3-diazine, which can be unsubstituted or mono- to trisubstituted by A or Hal,
and
Hal is F or Cl
and
A is alkyl having 1 to 6 C atoms, which can be monohalogenated to tetrahalogenated.

2. Lithium complex salts of the general formula (I) according to Claim 1
wherein R and R¹ are identical or different,
are optionally joined together directly by a single or double bond and
are each phenyl, naphthyl, pyridyl, pyrrole, 1,2-diazine, 1,3-diazine or 1,4-diazine.

3. Lithium complex salts of the general formula (I) according to Claim 1
wherein R and R¹ are identical or different,
are optionally joined together directly by a single or double bond and
are each anthracenyl or phenanthrenyl.

4. Lithium bis[2,2'-biphenyldiolato(2-)-O,O']-borate(1-) and lithium bis[2,3-naphthalenediolato(2-)-O,O']borate(1-) as lithium complex salts of the general formula (I) according to Claim 1.

5. Process for the preparation of lithium complex salts of the general formula (I) according to Claim 1, **characterized in that**
a) a lithium tetraalcoholatoborate is taken up with an aprotic solvent,
b) equimolar amounts of a hydroxyl compound or a 1:1 mixture of two different hydroxyl compounds, dissolved in an aprotic solvent, are added dropwise at a temperature of 10 to 60°C, with stirring, optionally under an inert gas atmosphere, and, if necessary, the reaction mixture is subsequently stirred at a temperature of 60 to 90°C,
c) if appropriate, the alcohol formed during the reaction is slowly distilled off by the application of a slight vacuum at a slightly elevated temperature,
d) the product formed crystallizes out, optionally after concentration of the reaction solution under vacuum at a temperature of 0 to 10°C, and if necessary, is separated off under an inert gas atmosphere, and
e) the product which has been separated off is dried by slow heating.

6. Process according to Claim 5, **characterized in that** tetrafluorocatechol, prepared by
a) reaction of pentafluorophenol with potassium carbonate in aqueous solution to give potassium pentafluorophenate,
b) etherification with ethylene oxide in DMSO as solvent, under an inert gas atmosphere, to give the cyclic diether 5,6,7,8-tetrafluoro-(1,4)-benzodioxane,
or
etherification with 2-bromoethanol and subsequent cyclization to the diether in the presence of potassium carbonate in DMF as solvent, and
c) cleavage of the ether in the presence of aluminium chloride with benzene as solvent, under an inert gas atmosphere,
is used as the hydroxyl compound for complexation.

7. Process according to Claim 5, **characterized in that** mono-, di- or tri-catechol, prepared in the same way as tetrafluorocatechol according to Claim 6, is used as the hydroxyl compound for complexation.

8. Process according to Claim 5, **characterized in that** the lithium tetraalcoholatoborate used is lithium tetramethanolatoborate, lithium tetraethanolatoborate or lithium tetrapropanolatoborate.

9. Process according to Claim 5, **characterized in that** an aprotic solvent from the group consisting of acetonitrile, acetone, nitromethane, dimethylformamide, dimethylacetamide and dimethyl sulfoxide is used.

10. Process according to Claim 5, **characterized in that** equimolar amounts of hydroxyl compound are added dropwise at room temperature.

11. Process according to Claim 5, **characterized in that** the alcohol formed is distilled off under the action of a slight vacuum at a temperature of 50 to 60°C.

12. Use of lithium complex salts of the general formula (I) according to Claim 1 as conducting salts in electrolytes for electrochemical cells.

13. Use of lithium complex salts of the general formula (I) according to Claim 1 as conducting salts in electrolytes for batteries.

14. Use of lithium complex salts of the general formula (I) according to Claim 1 as conducting salts in electrolytes in secondary lithium batteries.

15. Use of lithium complex salts of the general formula (I) according to Claim 1 in combination with other lithium salts and/or borate complexes in electrolytes of secondary lithium batteries.

16. Use of lithium complex salts of the general formula (I) according to Claim 1 in combination with other lithium salts from the group consisting of lithium phenate and dilithium 2,2'-biphenyldiolate in electrolytes of secondary lithium batteries.

17. Use of lithium complex salts of the general formula (I) according to Claim 1 in double layer and super capacitors.

18. Use of lithium complex salts of the general formula (I) according to Claim 1 for the manufacture of switchable windows or displays.

## Revendications

1. Sels complexes de lithium de formule générale (I) : 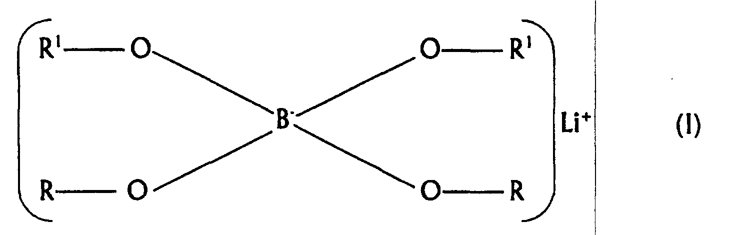 où
R et R¹ sont identiques ou différents, pouvant être éventuellement directement reliés entre eux par une liaison simple ou double, représentant separément un noyau aromatique choisi dans le groupe constitué par le phényle, le naphtyle, l'anthracényle ou le phénanthrényle, pouvant être non substitué ou mono-, di-, tri- ou tétrasubstitué par A ou Hal ou représentant ensemble un noyau aromatique choisi dans le groupe constitué par le naphtyle, l'anthracényle ou le phénanthrényle, pouvant être non substitué ou mono-, di-, tri- ou tétrasubstitué par A ou Hal ou représentant séparément un noyau aromatique hétérocyclique choisi dans le groupe constitué par le pyridyle, le pyrrole, la 1,2-diazine, la 1,3-diazine ou la 1,4-diazine, pouvant être non substitué ou mono-, di- ou trisubstitué par A ou Hal ou représentant ensemble un noyau aromatique hétérocyclique choisi dans le groupe constitué par le pyrrole, la 1,2-diazine ou la 1,3-diazine, pouvant être non substitué ou mono-, di- ou trisubstitué par A ou Hal et
Hal représentant F ou Cl, et
A un alkyle comportant 1 à 6 atomes de C, pouvant être mono-, di-, tri- ou tétrahalogéné.

2. Sels complexes de lithium de formule générale (I) selon la revendication 1, où R et R¹ sont identiques ou différents, pouvant être éventuellement directement reliés entre eux par une liaison simple ou double, représentant le phényle, le naphtyle, le pyridyle, le pyrrole, la 1,2-diazine, la 1,3-diazine ou la 1,4-diazine.

3. Sels complexes de lithium de formule générale (I) selon la revendication 1, où R et R¹ sont identiques ou différents, pouvant être éventuellement directement reliés entre eux par une liaison simple ou double, représentant l'anthracényle ou le phénanthrényle.

4. Le bis-[2,2'-biphényldiolato(2-)-0,0']-borate(1-) de lithium, le bis-[2,3-naphtalènediolato(2-)-0,0']-borate(1-) de lithium, comme sels complexes de lithium de formule générale (I) selon la revendication 1.

5. Procédé pour la préparation des sels complexes de lithium de formule générale (I) selon la revendication 1, caractérisé :
a) en ce que l'on reprend un tétraalcoolatoborate de lithium dans un solvant aprotique,
b) en ce que l'on additionne goutte à goutte, en agitant et éventuellement sous atmosphère d'un gaz protecteur, des quantités équimolaires d'un composé hydroxylé ou d'un mélange 1:1 de deux composés hydroxylés différents, dissous dans un solvant aprotique, à une température comprise entre 10 et 60°C et, si nécessaire, en ce que l'on agite ultérieurement le mélange réactionnel à une température comprise entre 60 et 90°C,
c) éventuellement en ce que l'on sépare par distillation lente en appliquant un léger vide et à une température légèrement augmentée, l'alcool formé pendant la réaction,
d) en ce que l'on cristallise, sous vide et à une température comprise entre 0 et 10°C, le produit formé, éventuellement après concentration de la solution réactionnelle et, si nécessaire, en ce que l'on sépare ledit produit sous atmosphère d'un gaz protecteur, et
e) en ce que l'on sèche le produit séparé en chauffant légèrement.

6. Procédé selon la revendication 5, **caractérisé en ce que** l'on utilise, comme composé hydroxylé pour former le complexe, le tétrafluorocatéchol préparé :
a) par réaction au pentafluorophénol avec le carbonate de potassium dans une solution aqueuse pour former le pentafluorophénate de potassium,
b) par éthérification avec de l'oxyde d'éthylène dans du DMSO comme solvant sous atmosphère d'un gaz protecteur pour former le diéther 5,6,7,8-tétrafluoro-(1,4)-benzodioxanne cyclique ou par éthérification avec le 2-bromoéthanol, suivie d'une cyclisation pour former le diéther en présence de carbonate de potassium dans du DMF comme solvant,
c) par dissociation de l'éther en présence de chlorure d'aluminium avec du benzène comme solvant sous atmosphère d'un gaz protecteur.

7. Procédé selon la revendication 5, **caractérisé en ce que** l'on utilise le mono-, di- ou tricatéchol, préparé comme le tétrafluorocatéchol selon la revendication 6, comme composé hydroxylé pour former le complexe.

8. Procédé selon la revendication 5, **caractérisé en ce que** l'on utilise comme tétraalcoolatoborate de lithium, le tétraméthanolatoborate de lithium, le tétraéthanolatoborate de lithium ou le tétrapropanolatoborate de lithium.

9. Procédé selon la revendication 5, **caractérisé en ce que** l'on utilise un solvant aprotique choisi dans le groupe constitué par l'acétonitrile, l'acétone, le nitrométhane, le diméthylformamide, le diméthylacétamide, le diméthylsulfoxyde.

10. Procédé selon la revendication 5, **caractérisé en ce que** l'on additionne goutte à goutte à la température ambiante des quantités équimolaires du composé hydroxylé.

11. Procédé selon la revendication 5, **caractérisé en ce que** l'on sépare par distillation l'alcool formé sous l'action d'un léger vide à une température comprise entre 50 et 60°C.

12. Utilisation des sels complexes de lithium de formule générale (I) selon la revendication 1 comme sel conducteur dans les électrolytes pour cellules électrochimiques.

13. Utilisation des sels complexes de lithium de formule générale (I) selon la revendication 1 comme sel conducteur dans les électrolytes pour batteries.

14. Utilisation des sels complexes de lithium de formule générale (I) selon la revendication 1 comme sel conducteur dans les électrolytes pour batteries secondaires au lithium.

15. Utilisation des sels complexes de lithium de formule générale (I) selon la revendication 1 en combinaison avec d'autres sels de lithium et/ou complexes de borates dans les électrolytes de batteries secondaires au lithium.

16. Utilisation des sels complexes de lithium de formule générale (I) selon la revendication 1 en combinaison avec d'autres sels de lithium choisi dans le groupe constitué par les phénates de lithium et les 2,2'-biphényldiolates de dilithium dans les électrolytes de batteries secondaires au lithium.

17. Utilisation des sels complexes de lithium de formule générale (I) selon la revendication 1 dans les condensateurs à couche double et des super-condensateurs.

18. Utilisation des sels complexes de lithium de formule générale (1) selon la revendication 1 pour la fabrication de fenêtres connectables et d'afficheurs.
